# EUROPEAN PATENT SPECIFICATION

(11) **EP 1 532 287 B1**
(45) Date of publication and mention of the grant of the patent: **22.05.2013**
(21) Application number: 03730988.7
(22) Date of filing: 11.06.2003
(51) Int. Cl.: C23C 4/08, C23C 30/00, F16D 65/12

(54) **WEAR RESISTANT COATED VEHICLE COMPONENT**
ABRIEBFEST BESCHICHTETES FAHRZEUGTEIL
COMPOSANT DE VEHICULE RECOUVERT D'UN REVETEMENT RESISTANT A L'USURE

(30) Priority: 11.06.2002 SE 0201773
(43) Date of publication of application: 25.05.2005
(73) Proprietor: Scania CV AB (publ), 151 87 Södertälje (SE)
(72) Inventor: BERGSTRÖM, Magnus, S-133 38 Saltsjöbaden (SE); STENFORS, Sven-Eric, S-122 37 Enskede (SE); ANDERSSON, Henrik, S-181 31 Lidingö (SE)
(86) International application number: PCT/SE2003/000981
(87) International publication number: WO 2003/104513

(56) References cited:
- WO-A1-92/08909
- US-A- 4 351 885
- PATENT ABSTRACTS OF JAPAN vol. 2000, no. 10 17 November 2000 & JP 2000 205314 A (YAMAHA MOTOR CO LTD) 25 July 2000
- PATENT ABSTRACTS OF JAPAN vol. 111, no. 99 26 June 1987 & JP 62 023 511 A (MITSUI ENG & SHIPBUILD CO LTD) 31 January 1987

## Description

### TECHNICAL FIELD OF THE INVENTION

The present invention relates to a wear resistant, coated, substantially metallic, vehicle component including a working face exerted to relative movement friction wear. The invention also relates to a vehicle comprising at least one such vehicle component.

### BACKGROUND OF THE INVENTION

Typical vehicle components for application of the invention are e.g. brake rotors, such a rotor having a disc-shaped portion comprising working face portions, said working face portions being exerted to friction wear during braking.

Prior art components are available, which have disc-shaped portions of the same substantially metallic material as the main part of the component, e g aluminium, an aluminium alloy or a cast iron alloy, the working face or surface also being of the same material. In order to extend the lifetime of such components, attempts have been made to coat the working face with still more wear resistant materials. Such attempts, e g as described in US Patent No. 4,290,510 and US Patent No. 4,180,622, have employed very hard ceramic materials. Such coatings, however, are associated with brittleness and/or structural changes and, thus, cracking and/or loss of wear resistant properties to a severe extent.

Therefore, an object of the present invention is to provide a vehicle component with a coating, which is ductile and prevents cracking and does not undergo structural changes during use.

A further object of the present invention is to provide components with an improved wear resistance.

Yet another object of the present invention is to improve the protection of the coating against undesired damages and thereby further extending the useful life of the vehicle component.

### SUMMARY OF THE INVENTION

The object of the present invention is obtained by a wear resistant, coated vehicle component according to the accompanying claim 1. Some embodiments are specified in the corresponding dependent claims.

Furthermore the invention relates to a vehicle comprising at least one such wear resistant coated vehicle component.

Advantages and achievements of the present invention according to the claims are described below.

### BRIEF DESCRIPTION OF THE DRAWINGS

The invention will be further described by way of example with reference to the accompanying diagrammatic drawing in which:

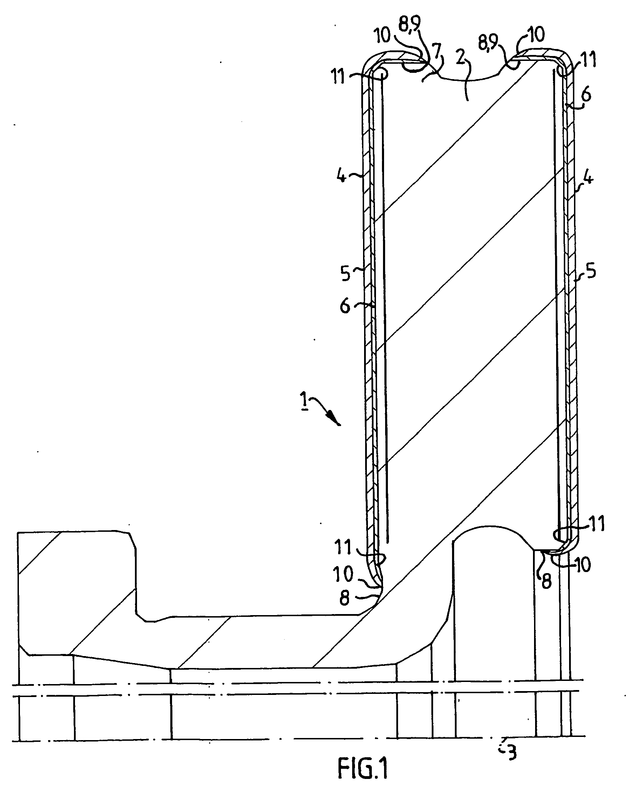

Fig. 1 schematically shows an axial section of a brake disc according to a first embodiment of a wear resistant coated vehicle component according to the invention.

### DETAILED DESCRIPTION OF EMBODIMENTS

In the following description and claims all percentages given for elements in the alloys specified are given as percentage by weight.

In Fig. 1, 1 designates a brake disc component according to the invention, said brake disc having a disc-shaped part 2 with a main extension plane substantially perpendicular to the axial direction 3 of the brake disc component. The disc-shaped part 2 comprises at least one, but preferably two working faces 4 arranged and adapted to be exerted to relative movement friction wear, normally by means of a vehicle brake pad (not shown) being applied against the working face and pressed against said working face in a braking action, said working face rotating.

According to the invention the working face is formed by a wear resistant top coating 5 made substantially of molybdenum, a typical composition comprising more than 99 % molybdenum, the balance being normal impurities, including iron when applicable.

The thickness of the top coating 5 is 100 to 600 µm, preferably about 500 µm.

Further a bond coating 6 is in the shown embodiment applied to the base material of the component to bond the top coating to the base material. Different bond coating compositions may be imagined. According to an embodiment the bond coating comprises a nickel-chromium-aluminium-yttrium alloy. According to another embodiment the bond coating comprises an iron-chromium-aluminium-nickel-yttrium alloy. According to yet another embodiment the bond coating comprises a cobalt-chromium-aluminium-yttrium alloy.

The base material in the above referenced brake disc embodiment may be e.g. an aluminium alloy, e.g. the US standard alloy A 356 or the Swedish standard alloy SIS 4245 comprising, mainly, 7 % silicon and the balance aluminium, or a cast iron alloy, e.g. a standard grey cast iron alloy comprising about 3 - 3,7 % carbon, 2,1 - 2,6 % silicon, 0,5 - 0,8 manganese, the balance substantially iron.

According to an embodiment the thickness of the bond coating is 0 - 100 µm, preferably about 50 µm. According to certain embodiments, especially using cast iron as a base material, the top coating may be applied without a bond coating. Tests with Molybdenum directly applied to the base material have in some circumstances given a longer lifetime for the vehicle component than a corresponding vehicle component with a bond coating.

Further, according to preferred embodiments both the top coating and, when applicable, the bond coating are applied by a thermal spray process. However, other known processes for applying the coating/-s may be used.

Furthermore, it is essential to the invention that the top coating and, when applicable, the bond coating are finished or terminated on a component surface or face 8, which is not identical to the working surface of the component. According to one embodiment, the top coating and the bond coating end substantially perpendicular to the working face plane, e.g. as can be seen in Fig. 1 where the respective coatings are finished on the cylindrical peripheral surface 9 of the disc-shaped part 2 of the brake disc. This is in order not to expose the end face 10 of the coatings to corrosion etc on the working face or at the peripheral edge 11 of the working face. Such exposure may damage at least parts of the coatings due to high working temperatures etc of the coatings.

It is of course also within the invention to end the top coating and bond coating on another surface on a vehicle component other than a surface substantially perpendicular to the working face plane. In an embodiment where a working face is adjacent to a chamfered edge surface forming an angle to the working face, it may be suitable to end the coatings on the chamfered edge surface adjacent to the working surface.

Described here as an example is a brake disc. However, coatings according to the invention may be applied to other vehicle components, e.g. components being made of an aluminium alloy or a cast iron alloy as a base material and preferably being manufactured by an initial casting process. Examples of such components where the technical features according to the claimed invention are particularly advantageous are, besides brake discs, clutch components, crankshafts and flywheels. The technical features according to the claimed are however advantageous also for other vehicle components such as cast components in valve systems, gear box components, spring components and gear-wheel components.

### Example 1

A brake disc cast from an A1 Si7 aluminium alloy was, as far as the two working faces were concerned, coated with a standard bond coating and a top coating of 99 % molybdenum. The coatings were applied by a plasma spray process. The thickness of the bond coating was about 50 µm and the thickness of the top coating was about 310 µm.

Retardation tests showed that the friction properties of the top coating using ordinary vehicle brake pads corresponded substantially to those of the base material. Further optimisation may be made.

### Example 2

A brake disc cast from a standard grey cast iron alloy comprising about 3,5 % carbon, 2,0 % silicon, 0,4 % manganese, 0,4 % copper, the balance iron and normal impurities was, as far as the two working faces were concerned, coated with a top coating of 99 % molybdenum. The coating was applied by a plasma spray process. The thickness of the coating was about 300 µm. Results comparable to those described in Example 1 were obtained.

Molybdenum has a thermal expansivity, which is smaller than the one of e.g. the intended base materials aluminium, aluminium alloys and cast iron alloys for components to be coated. This means that compressive stresses appear in the base material of the working face when the temperature is elevated during use of the component since the molybdenum coating restricts the expansion of the base material. This, in turn, restricts the formation of cracks in the working face base material. Further, the molybdenum top coating has a thermally isolating influence.

The top coating has proven to be especially beneficial and applicable to a vehicle component, especially if it is a brake disc, a flywheel, a rotatable clutch component if the top coating has a surface roughness R_{z} ranging between 10 and 60 µm, where R_{z} is the Average Maximum Height of the surface profile. It is also advantageous if the top coating has a surface roughness Rₖ ranging between 2 and 15 µm, where Rₖ is the Core Roughness Depth; a surface roughness Rₚₖ ranging between 0.5 and 10.0 µm, where Rₚₖ is the Reduced Peak Height; a surface roughness Rᵥₖ ranging between 5 and 20 µm., where Rᵥₖ is the Reduced Valley Depth and a surface roughness Rₐ ranging between 2 and 10 µm, where Rₐ is the Arithmetical Mean Deviation. R_{z}, Rₖ , Rₚₖ , Rᵥₖ and Rₐ are all known surface roughness parameters known to a person skilled in the art and are therefore not described more in detail.

## Claims

1. A coated vehicle component made of a substantially metallic base material and comprising at least one working face (4) arranged to be exerted to relative movement friction wear and comprising a wear resistant coating, **characterized by** a top coating (5) comprising 99% or more molybdenum by weight, the balance being normal impurities, on the working face (4) and that the top coating (5) is finished or terminated on a surface forming an angle with the working face (4).

2. A coated vehicle component according to claim 1, **characterized in that** the surface is adjacent to the working face.

3. A coated vehicle component according to claim 2, **characterized in that** the surface is a chamfered edge surface.

4. A coated vehicle component according to claim 1, **characterized in that** the surface is substantially perpendicular to the working face (4).

5. A coated vehicle component according to any one of claims 1-4, **characterized in that** the top coating is 100 - 600 µm, preferably about 500 µm, thick.

6. A coated vehicle component according to any one of claims 1-5, **characterized in that** the top coating has a surface roughness R_{z} ranging between 10 and 60 µm.

7. A coated vehicle component according to any one of claims 1-6, **characterized in that** the top coating has a surface roughness Rₖ ranging between 2 and 15 µm.

8. A coated vehicle component according to any one of claims 1-7, **characterized in that** the top coating has a surface roughness Rₚₖ ranging between 0.5 and 10.0 µm.

9. A coated vehicle component according to any one of claims 1-8, **characterized in that** the top coating has a surface roughness Rᵥₖ ranging between 5 and 20 µm.

10. A coated vehicle component according to any one of claims 1-9, **characterized in that** the top coating has a surface roughness Rₐ ranging between 2 and 10 µm.

11. A coated vehicle component according to any one of claims 1-10, **characterized in that** the top coating is applied to a bond coating (6), which is applied to the base material (7).

12. A coated vehicle component according to claim 11, **characterized in that** the bond coating is a nickel-chromium-aluminium-yttrium alloy or an iron-chromium-aluminium-nickel-yttrium alloy or a cobalt-chromium-aluminium-yttrium alloy.

13. A coated vehicle component according to claim 11 or 12, **characterized in that** said bond coating is 0 - 100 µm, preferably about 50 µm, thick.

14. A coated vehicle component according to any one of claims 1-13, **characterized in that** the base material has a thermal expansivity, which exceeds that of the top coating material.

15. A coated vehicle component according to any one of claims 1-14, **characterized in that** the base material is aluminium, an aluminium alloy or a cast iron alloy.

16. A coated vehicle component according to any one of claims 1-15, **characterized in that** the coated vehicle component is a brake disc (1), a crankshaft, a flywheel or a clutch component.

17. A vehicle comprising at least one coated vehicle component according to claim 1.

## Patentansprüche

1. Beschichtete Fahrzeugkomponente, hergestellt aus einem im Wesentlichen metallischen Grundmaterial und umfassend mindestens eine Arbeitsfläche (4), die dazu angeordnet ist, um einem Relativbewegungs-Reibverschleiß ausgesetzt zu werden, und umfassend eine verschleißfeste Beschichtung,
**gekennzeichnet durch** eine Oberbeschichtung (5) umfassend 99 Gewichts-% oder mehr Molybdän auf der Arbeitsfläche (4), wobei der Rest übliche Verunreinigungen sind, und wobei die Oberbeschichtung (5) an einer Oberfläche beendet oder abgeschlossen ist, die mit der Arbeitsfläche (4) einen Winkel einschließt.

2. Beschichtete Fahrzeugkomponente nach Anspruch 1,
**dadurch gekennzeichnet, dass** die Oberfläche zu der Arbeitsfläche benachbart ist.

3. Beschichtete Fahrzeugkomponente nach Anspruch 2,
**dadurch gekennzeichnet, dass** die Oberfläche eine Oberfläche mit abgeschrägter Kante ist.

4. Beschichtete Fahrzeugkomponente nach Anspruch 1,
**dadurch gekennzeichnet, dass** die Oberfläche im Wesentlichen senkrecht zu der Arbeitsfläche (4) ist.

5. Beschichtete Fahrzeugkomponente nach einem der Ansprüche 1 bis 4,
**dadurch gekennzeichnet, dass** die Oberbeschichtung 100 - 600 µm, vorzugsweise etwa 500 µm dick ist.

6. Beschichtete Fahrzeugkomponente nach einem der Ansprüche 1 bis 5,
**dadurch gekennzeichnet, dass** die Oberbeschichtung eine Oberflächenrauigkeit R_{z} aufweist, die zwischen 10 und 60 µm liegt.

7. Beschichtete Fahrzeugkomponente nach einem der Ansprüche 1 bis 6,
**dadurch gekennzeichnet, dass** die Oberbeschichtung eine Oberflächenrauigkeit Rₖ aufweist, die zwischen 2 und 15 µm liegt.

8. Beschichtete Fahrzeugkomponente nach einem der Ansprüche 1 bis 7,
**dadurch gekennzeichnet, dass** die Oberbeschichtung eine Oberflächenrauigkeit Rₚₖ hat, die zwischen 0,5 und 10,0 µm liegt.

9. Beschichtete Fahrzeugkomponente nach einem der Ansprüche 1 bis 8,
**dadurch gekennzeichnet, dass** die Oberbeschichtung eine Oberglächenrauigkeit Rᵥₖ hat, die zwischen 5 und 20 µm liegt.

10. Beschichtete Fahrzeugkomponente nach einem der Ansprüche 1 bis 9,
**dadurch gekennzeichnet, dass** die Oberbeschichtung eine Oberflächenrauigkeit Rₐ hat, die zwischen 2 und 10 µm liegt.

11. Beschichtete Fahrzeugkomponente nach einem der Ansprüche 1 bis 10,
**dadurch gekennzeichnet, dass** die Oberbeschichtung auf eine Haftbeschichtung (6) appliziert wird, die auf das Grundmaterial (7) appliziert wird.

12. Beschichtete Fahrzeugkomponente nach Anspruch 11,
**dadurch gekennzeichnet, dass** die Haftbeschichtung eine Nickel-Chrom-Aluminium-Yttrium-Legierung oder eine Eisen-Chrom-Aluminium-Nickel-Yttrium-Legierung oder eine Kobalt-Chrom-Aluminium-Yttrium-Legierung ist.

13. Beschichtete Fahrzeugkomponente nach Anspruch 11 oder 12,
**dadurch gekennzeichnet, dass** die Haftbeschichtung 0 bis 100 µm, vorzugsweise etwa 50 µm dick ist.

14. Beschichtete Fahrzeugkomponente nach einem der Ansprüche 1 bis 13,
**dadurch gekennzeichnet, dass** das Grundmaterial einen Volumenausdehnungskoeffizienten aufweist, der den des Oberbeschichtungsmaterials übersteigt.

15. Beschichtete Fahrzeugkomponente nach einem der Ansprüche 1 bis 14,
**dadurch gekennzeichnet, dass** das Grundmaterial Aluminium, eine Aluminiumlegierung oder eine Eisengusslegierung ist.

16. Beschichtete Fahrzeugkomponente nach einem der Ansprüche 1 bis 15,
**dadurch gekennzeichnet, dass** die beschichtete Fahrzeugkomponente eine Bremsscheibe (1), eine Kurbelwelle, ein Schwungrad oder eine Kupplungskomponente ist.

17. Fahrzeug umfassend mindestens eine beschichtete Fahrzeugkomponente nach Anspruch 1.

## Revendications

1. Pièce de véhicule revêtue constituée d'un matériau de base essentiellement métallique et comprenant au moins une face de travail (4) conçue pour être exposée à une usure par frottement due à un mouvement relatif et comprenant un revêtement résistant à l'usure, **caractérisée par** un revêtement de finition (5) comprenant 99 % en poids ou plus de molybdène, le restant étant constitué d'impuretés normales, sur la face de travail (4) et en ce que le revêtement de finition (5) est fini ou terminé sur une surface formant un angle avec la face de travail (4).

2. Pièce de véhicule revêtue selon la revendication 1, **caractérisée en ce que** la surface est contiguë à la face de travail.

3. Pièce de véhicule revêtue selon la revendication 2, **caractérisée en ce que** la surface est une surface de bord chanfreiné.

4. Pièce de véhicule revêtue selon la revendication 1, **caractérisée en ce que** la surface est essentiellement perpendiculaire à la face de travail (4).

5. Pièce de véhicule revêtue selon l'une quelconque des revendications 1 à 4, **caractérisée en ce que** le revêtement de finition a une épaisseur d'environ 100 à 600 µm, de préférence environ 500 µm.

6. Pièce de véhicule revêtue selon l'une quelconque des revendications 1 à 5, **caractérisée en ce que** le revêtement de finition a une rugosité de surface R_{z} comprise entre 10 et 60 µm.

7. Pièce de véhicule revêtue selon l'une quelconque des revendications 1 à 6, **caractérisée en ce que** le revêtement de finition a une rugosité de surface Rₖ comprise entre 2 et 15 µm.

8. Pièce de véhicule revêtue selon l'une quelconque des revendications 1 à 7, **caractérisée en ce que** le revêtement de finition a une rugosité de surface Rₚₖ comprise entre 0,5 et 10,0 µm.

9. Pièce de véhicule revêtue selon l'une quelconque des revendications 1 à 8, **caractérisée en ce que** le revêtement de finition a une rugosité de surface Rᵥₖ comprise entre 5 et 20 µm.

10. Pièce de véhicule revêtue selon l'une quelconque des revendications 1 à 9, **caractérisée en ce que** le revêtement de finition a une rugosité de surface Rₐ comprise entre 2 et 10 µm.

11. Pièce de véhicule revêtue selon l'une quelconque des revendications 1 à 10, **caractérisée en ce que** le revêtement de finition est appliqué sur un revêtement d'accrochage (6), qui est appliqué sur le matériau de base (7).

12. Pièce de véhicule revêtue selon la revendication 11, **caractérisée en ce que** le revêtement d'accrochage est un alliage de nickel-chrome-aluminium-yttrium ou un alliage de fer-chrome-aluminium-nickel-yttrium ou un alliage de cobalt-chrome-aluminium-yttrium.

13. Pièce de véhicule revêtue selon la revendication 11 ou 12, **caractérisée en ce que** ledit revêtement d'accrochage a une épaisseur de 0 à 100 µm, de préférence environ 50 µm.

14. Pièce de véhicule revêtue selon l'une quelconque des revendications 1 à 13, **caractérisée en ce que** le matériau de base a un coefficient de dilatation thermique qui excède celui du matériau du revêtement de finition.

15. Pièce de véhicule revêtue selon l'une quelconque des revendications 1 à 14, **caractérisée en ce que** le matériau de base est de l'aluminium, un alliage d'aluminium ou un alliage de fer fondu.

16. Pièce de véhicule revêtue selon l'une quelconque des revendications 1 à 15, **caractérisée en ce que** la pièce de véhicule revêtue est un disque de frein (1), un vilebrequin, un volant ou une pièce d'embrayage.

17. Véhicule comprenant au moins une pièce de véhicule revêtue selon la revendication 1.
